# EUROPEAN PATENT SPECIFICATION

(11) **EP 1 434 455 B1**
(45) Date of publication and mention of the grant of the patent: **17.05.2006**
(21) Application number: 03028856.7
(22) Date of filing: 06.07.2001
(51) Int. Cl.: H04Q 7/38, H04Q 7/36

(54) **Code-power measurement for dynamic channel allocation**
Kodeleistungsmessung für dynamische Kanalzuwendung
Mesure de puissance de code pour l'attribution dynamique de canaux

(30) Priority: 10.07.2000 US 217093 P
(43) Date of publication of application: 30.06.2004
(62) Divisional of application: 01952502.1
(73) Proprietor: INTERDIGITAL TECHNOLOGY CORPORATION, Wilmington, DE 19801 (US)
(72) Inventor: Pan, Jung-Lin, Selden NY 11784 (US); Zeira, Ariela, Huntington NY 11743 (US)
(74) Representative: Henningsson, Gunnar

(56) References cited:
- GB-A- 2 320 648
- US-A- 5 533 013
- MIHAILESCU C ET AL: "Dynamic resource allocation for packet transmission in UMTS TDD-CDMA systems" VEHICULAR TECHNOLOGY CONFERENCE, 1999 IEEE 49TH HOUSTON, TX, USA 16-20 MAY 1999, PISCATAWAY, NJ, USA,IEEE, US, 16 May 1999 (1999-05-16), pages 1737-1741, XP010342115 ISBN: 0-7803-5565-2

## Description

This application claims priority from Provisional Application No. 60/217,093, filed July 10, 2000.

BACKGROUND

The invention relates generally to resource allocation in wireless spread spectrum time division duplex communication systems using code division multiple access. More specifically, the invention relates to assigning time slots and codes in such systems.

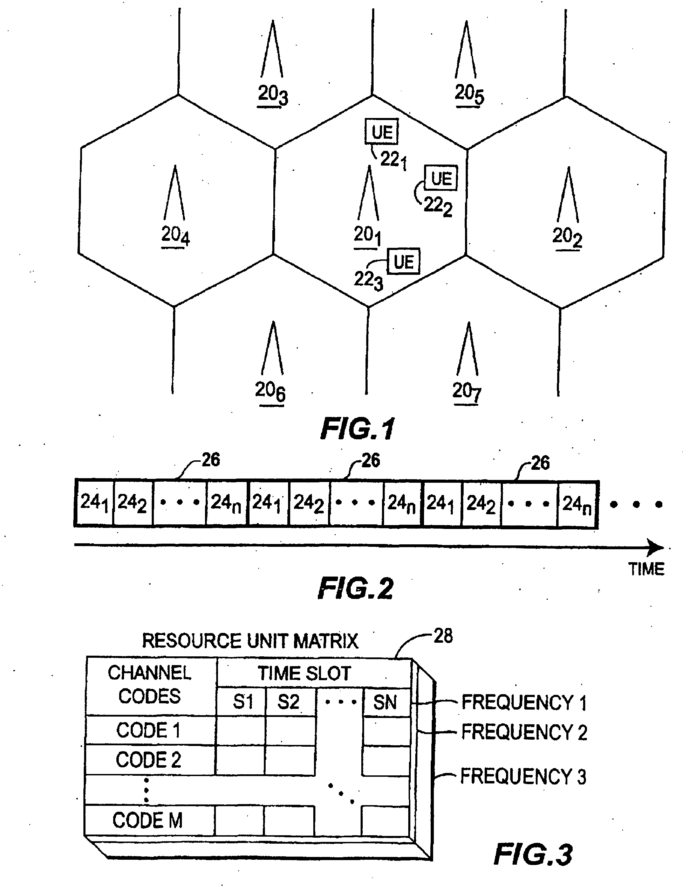

Figure 1 depicts a wireless spread spectrum time division duplex (TDD) communication system using code division multiple access (CDMA). The system has a plurality of base stations 20₁-20₇. Each base station 20₁ communicates with user equipments (UEs) 22₁-22₃ in its operating area or cell. Communications transmitted from the base station 20₁ to the UE 22₁ are referred to as downlink communications and communications transmitted from the UE 22₁ to the base station 20₁ are referred to as uplink communications. In addition to communicating over different frequency spectrums, spread spectrum TDD/CDMA systems carry multiple communications over the same spectrum. The multiple signals are distinguished by their respective codes.

Since a signal sent using a particular code is distinguishable from other signals in the same spectrum, each code creates a virtual communication channel within the spectrum. For use in distinguishing signals originating from different cells, each base station 20₁-20₇ has an assigned scrambling code, c*_{scramb}. To transmit a specific data signal in such a system, the data signal is mixed with its base station's scrambling code, c*_{scramb'} and spread using its assigned channel code.

Also, to more efficiently use the spread spectrum, TDD/CDMA systems use repeating frames 26 divided into a number of time slots 24₁-24ₙ, such as fifteen time slots, as illustrated in Figure 2. In such systems, a communication is sent in selected time slots 24₁-24ₙ using selected codes. Accordingly, one frame 26 is capable of carrying multiple communications distinguished by both time slot 24₁-24ₙ and code. The use of a single code in a single time slot at a single frequency spectrum with a spreading factor of sixteen is referred to as a resource unit. If a lower spreading factor is used, the use of a single code in a time slot is considered more than a single resource unit. To illustrate, using a spreading factor of one for a code in a time slot is sixteen resource units.

A system using N time slots, S1-SN, M channel codes, Code 1-Code M, and O frequency spectrums, Frequency 1-Frequency O, is illustrated in the Matrix 28 of Figure 3. Each empty box in the Matrix 28 represents a single resource unit (if a spreading factor of sixteen is used). This Matrix 28 has a total of MxNxO resource units. A typical TDD system uses 15 time slots, 16 channel codes and one or multiple frequency spectrums. Based on the bandwidth required to support a communication, one or multiple resource units are assigned to that communication.

One problem in such systems is assigning resource units in the presence of radio interference. Radio interference has multiple causes, such as nearby radio frequency sources and cross interference by signals transmitted in neighboring cells. Sending a communication over a resource unit with a high interference level may result in a loss of signal data.

One technique for dealing with this problem is to measure the interference level in each time slot immediately prior to assigning resource units to a communication. Only resource units in time slots having acceptable interference levels will be assigned to the communication. Although this technique reduces the possibility of signal data loss, it does not eliminate all resource units suffering unacceptable interference levels. Additionally, measuring the interference levels immediately prior to assignment requires extensive monitoring using valuable system resources. Accordingly, there exists a need for an alternative approach for assigning resource units.
In "Dynamic resource allocation for packet transmission in UMTS TDD TD-CDMA systems", Vehicular technology conference, IEEE, 16 May 1999, pages 1737-1741, ISBN 0-7803-5565-2, Mihailescu C et al. discloses a TD-CDMA access scheme which defines a Resource Unit, RU, as an association of frequencey/time-slot/code and a Soft Resource Unit, SRU, as a frequencey time-slot pair. When the maximal number of used codes is reached, the SRU is in "Used" state, and when its allocation would perturb another call the SRU is in "Blocked" state. Different policies are described for blocking an SRU in order to avoid an increased intercell interference level.

SUMMARY

The invention is defined by the method defined in independent claim 1.

BRIEF DESCRIPTION OF THE DRAWING(S)

Figure 1 is a wireless spread spectrum TDD/CDMA system.

Figure 2 is an illustration of time slots in repeating frames.

Figure 3 is an illustration of resource units distinguished by channel code, time slot and frequency.

Figure 4 is a simplified base station and user equipment.

Figure 5 is a flow chart of slow dynamic channel assignment.

Figure 6 is an example of a preference matrix.

Figure 7 is a code power interference level measurement device.

Figure 8 is a flow chart of fast dynamic channel assignment.

Figure 9 is an illustration of two threshold code assignment.

Figure 10 is an illustration of multiple threshold code assignment.

Figure 11 is a flow chart of multiple threshold code assignment.

DETAILED DESCRIPTION OF THE PREFERRED EMBODIMENT(S)

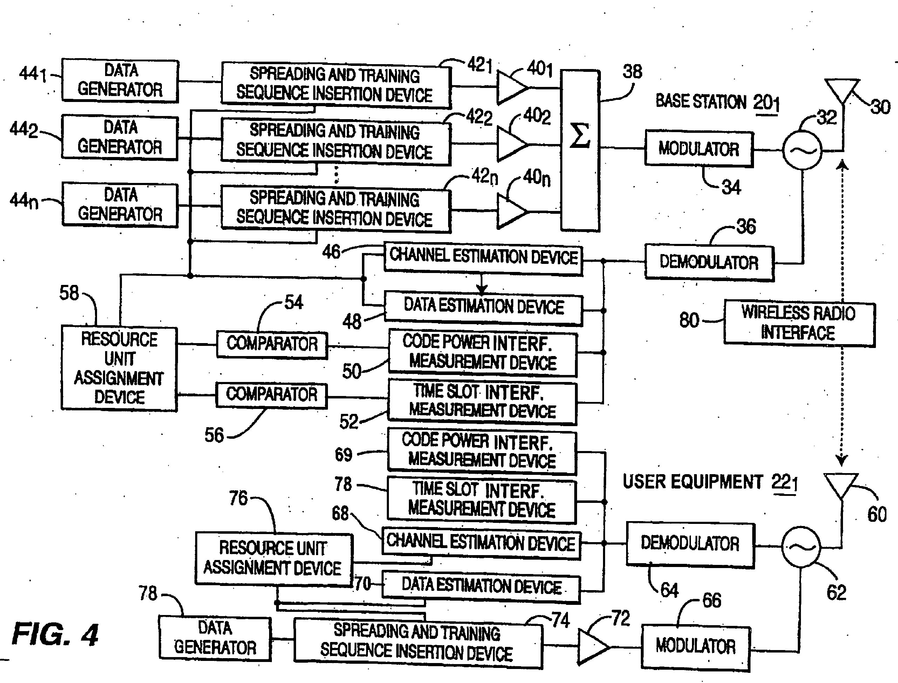

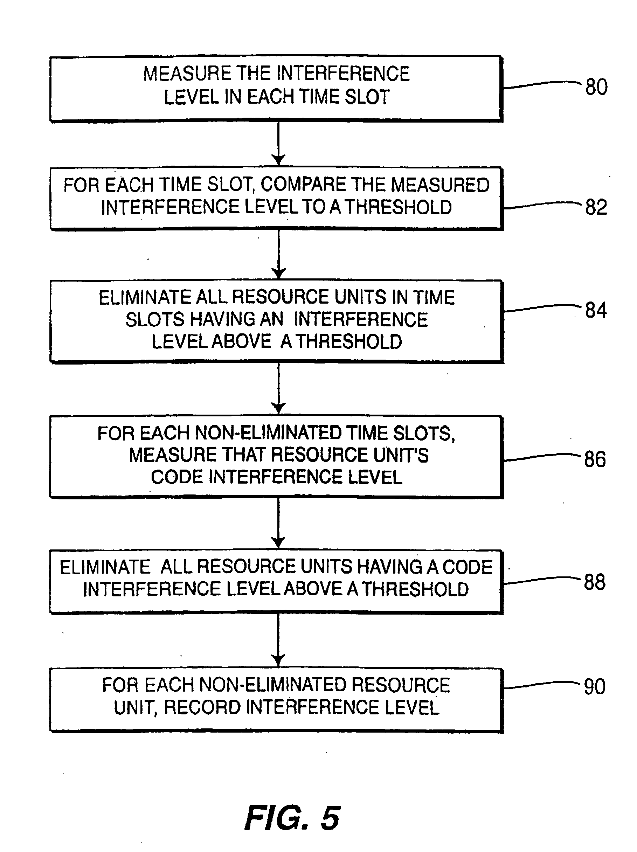

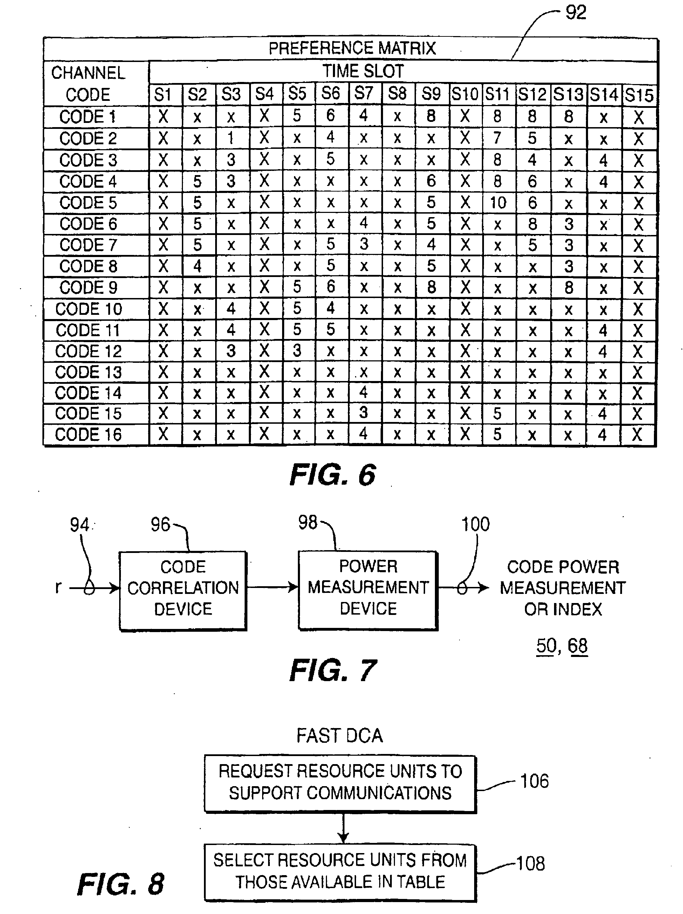

Figure 4 is a simplified base station 20₁ and UE 22, used to implement slow and fast dynamic channel allocation (DCA). Figure 5 is a flow chart of slow DCA. The flow chart of Figure 5 will be described in conjunction with the preference matrix 92 of Figure 6. Figure 6 is an illustration of a preference matrix 92 created as a result of slow DCA in a TDD/CDMA system having 16 channel codes, 15 time slots and one frequency. Each box in the matrix 92 represents one out of 240 possible resource units.

Initially, the radio frequency power interference level in each time slot is measured, such as by interference signal code power (ISCP) or determining inter-cell interference, by link gain, step 80. The ISCP may be measured using the midambles of received communication bursts, although other ISCP measurement techniques may be used. Each time slot's interference is measured at either the base station 20₁, UEs 22₁-22ₙ or both. For time slots interference measurements taken at the base station 20₁, the base station's antenna 30 receives various radio frequency signals. The received signals are passed through an isolator 32 to a demodulator 36 to produce a baseband signal. A time slot interference measurement device 52 processes the baseband signal to measure the interference level, such as by ISCP, within each time slot 24₁-24ₙ of the frame 26.

For time slot interference measurements taken at the UEs 22₁-22ₙ, the UE's antenna 60 receives various radio frequency signals. The received signals are passed through an isolator or switch 62 to a demodulator 64 to produce a baseband signal. A time slot interference measurement device 78 processes the baseband signal to measure the interference level, such as by ISCP, within each time slot 24₁-24ₙ. The time slot measurements taken at each UE 22₁-22ₙ are typically signaled to the base station 20₁. Alternately, the measurements may be multiplexed with the uplink data sent to the base station 20₁ produced by the data generator 78.

A comparator 56 at the base station 20₁ compares each time slot's interference level to a threshold, step 82. If only the base station 20₁ took time slot interference measurements, each of these measurements is compared to the threshold. If only the UEs measurements are used, the comparator 56 compares the average for each time slots interference level to the threshold. If measurements from the base station 20₁ and UEs 22₁-22ₙ are used, a weighted average of each time slot's measurement is used with the base station's given higher weight. If UE measurements or UE and base station measurements differ significantly, each will use its own measurements to determine time slot availability. Alternately, averaging may still be applied. If a time slot's interference level is above the threshold, all the resource units associated with that time slot are eliminated for potential assignment to communications, step 84. The resource unit assignment device 58 eliminates all the eliminated time slots' resource units in the stored preference matrix 92. To illustrate using Figure 6, time slot 4 has an unacceptable interference level. All of the resource units in the column under time slot 4 are marked with an "X" indicating that they are eliminated from potential assignment. Additionally, other time slots are eliminated because they are reserved for other purposes, such as for a broadcast channel, and are likewise marked with an "X".

For each resource unit in time slots having acceptable interference levels, the code power interference level is measured, step 86. The code power measurements may be taken at the base station 20₁ with code power interference measurement device 50, UE's code power interference measurement devices 69 or both. Code power measurements taken at the UE 20₁ are either signaled or multiplexed with uplink data.

Figure 7 depicts one possible code power interference measuring device 50, 68. The code power measurement 50, 69 is taken on a frequency spectrum where the codes of interest are to be transmitted. A signal 94 representing the received frequency spectrum is input into the code power measurement device. The input signal 94 may be a radio frequency, an intermediate frequency or a baseband signal. A code correlation device 96 correlates the input signal with the code of interest. The code correlation device 96 may be a despreader, a correlator or a matched filter. If the code of interest is a complex code, the correlator may perform a complex multiplication for the correlation. The power measurement device 98 sums the power of the correlated chips. If a complex code is used, the sum is the sum of the magnitude of the complex chips. The resulting sum is the code power 100 for the code of interest. The code power measurement is taken during each time slot to be measured. The measured power may be indexed into a short hand value, such as "1" to "10" in Figure 6.

Each non-eliminated resource unit's code interference level is compared to a threshold at comparator 54. If only the base station 20₁ took code interference measurements, these measurements are compared to the threshold. If only the UE's measurements are used, the comparator 54 compares the average of these measurements to the threshold. If measurements from the base station 20₁ and UEs 22₁-22ₙ are used, a weighted average is used. Typically, the base station's measurement is given a higher weight. Alternately, the interference measurements may be UE 22₁-22ₙ specific. Furthermore, if UE measurements or UE and base station measurements differ significantly, each will use its own measurements. Each UE's measurement is compared to a threshold for use in resource assignments for that UE 22₁-22ₙ. Each UE 22₁-22ₙ has its own preference matrix 92, if UE specific.

If a resource unit's code interference level is above the threshold, the resource unit is eliminated from being assigned, step 88. The resource unit assignment device 58 eliminates the resource unit in the preference matrix 92. To illustrate using Figure 6, the resource unit associated with time slot 2 and channel code 1 has an unacceptable interference level and is marked in the matrix 92 with an "x". The resource unit assignment device 58 also stores in preference matrix 92 an indicator of the code interference level of the acceptable resource units, step 90. As shown in the preference matrix 92, the interference levels are indicated with a value of "1" to "10" with a "1" having a high marginally acceptable code interference level and a "10" having an extremely low code interference level.

The base station's resource unit assignment device 58 sends signals to the base station's data estimation device 48, channel estimation device 46 and spreading and training sequence insertion devices 42₁-42ₙ to control which codes and time slots are used by each device. The channel estimation device 46 and data estimation device 48 process the baseband signal in the time slots and appropriate codes assigned to the uplink communication's burst and the base station's scrambling code, c*_{scramb}. The assigned time slots and codes are sent to the channel estimation device 46 and data estimation device 48 from the resource unit assignment device 58. The channel estimation device 46 commonly uses the training sequence component in the baseband signal to provide channel information, such as impulse responses. The channel information is used by the data estimation device 48 to estimate the data in the received burst.

Data to be sent to the UEs 20₁-20ₙ, such as over a traffic channel, is generated by data generators 44₁-44ₙ. The data is assigned one or multiple resource units based on the communications' bandwidth requirements by the resource unit assignment device 58. Each spreading and training sequence insertion device 42₁-42ₙ mixes the data with the base station's scrambling code, c*_{scramb}, spreads the data and makes the spread reference data time-multiplexed with a training sequence in the appropriate time slots and codes of the assigned resource units. The output of the spreading and training sequence insertion devices are referred to as a communication burst. Each communication burst is subsequently amplified by a corresponding amplifier 40₁-40ₙ. Each amplified communication burst is summed by a sum device 38 with any other communication burst created through other devices. The summed communication bursts are modulated by a modulator 34. The modulated signal is passed through an isolator 32 and radiated by an antenna 30, as shown, or, alternately, through an antenna array. The radiated signal is passed through a wireless radio interface SO to the UEs 22₁-22ₙ.

The base station's resource unit assignment device also sends the resource unit assignments to the UEs 22₁-22ₙ. The assignments may be signaled to the UEs 22₁-22ₙ or multiplexed with traffic data. The sent assignments are used by the UE's resource unit assignment device 76 to determine which resource units are assigned to the UE's downlink and uplink channels.

For the received downlink data, the channel estimation device 68 and data estimation device 70 processes the received baseband signal in the time slots and appropriate codes assigned to the downlink communication burst and the base station's scrambling code, c*_{scramb}. The assigned time slots and codes are sent to the channel estimation device 68 and data estimation device 70 from the resource unit assignment device 58. The channel estimation device 68 commonly uses the training sequence component in the baseband signal to provide channel information. The channel information is used by the data estimation device 70 to estimate the data in the received burst. Uplink data is generated by a data generator 78. The uplink data is assigned one or multiple resource units based on the communication's bandwidth requirements. Spreading and training sequence insertion device 74 mixes the data with the base station's scrambling code, c*_{scramb}, spreads the data and makes the spread reference data time-multiplexed with a training sequence in the appropriate time slots and codes of the assigned resource units. The assigned resource units are sent to the spreading and training sequence insertion device 74 by the resource unit assignment device 76. The resulting sequence from the spreading and training sequence insertion device 74 is referred to as a communication burst. The communication burst is subsequently amplified by an amplifier 72. The amplified communication burst is modulated to radio frequency by the modulator 66, passed through an isolator 62 and radiated by an antenna 60 or, alternately, by an antennal array. The radiated signal passes through the wireless radio interface 80 to the base station 20₁.

The preference matrix 92 used by the resource unit assignment device 58 may be updated on a per frame basis or on a more periodic basis. Using a statistical analysis, the preference matrix 92 may be updated from a period of minutes to a daily basis. In one approach, the user equipments 22₁-22ₙ measure the time slot interference level and the code interference level during the idle time between successive reception and transmission bursts. These measurements are sent to the base station 20₁. In another approach, the measurements are taken on a periodic basis. In a different approach, the base station 201 signals the UE 22₁-22ₙ to take measurements. Accordingly, the measurements are taken on-demand. The base station 20₁ updates the preference matrix 92 based on these measurements. The updated resource unit assignments are subsequently sent from the base station 20₁ to the UEs 22₁-22ₙ.

Figure 8 is a flow chart for fast DCA and will also be explained in conjunction with Figures 4 and 6. To support communications, a cell is assigned resource units for both the uplink and the downlink. The number of assigned resource units is based on the uplink and downlink bandwidth demand. When the cell requires additional resource units, the resource unit assignment device 58 will select additional resource units to allocate for uplink and downlink communications, step 106. Using the preference matrix 92, the resource unit assignment device 58 will assign a corresponding number of resource units from the available resource units, step 94. When demand decreases, conversely, the resource unit assignment device 58 releases the resource units.

One approach for selecting resource units is first available. Using this technique, the assignment device 58 searches through the preference matrix 92 until it reaches the first available acceptable time slot. To illustrate using matrix 92, if two resource units were requested, starting at code 1, slot 1 and first working left to right, code 1, slots 5 and 6 would be selected. These slots are the first encountered acceptable slots.

Another approach is least interfered channel. The assignment device 58 searches through the preference matrix 92 for the resource unit with the lowest code interference level. To illustrate, if one resource unit was selected, code 5, slot 11 having a value of "10" is selected. Since this approach searches through the entire matrix 92 before selecting a resource unit, it requires more processing time. However, since the selected resource unit has the lowest interference level out of the available resource units, communication interference is reduced.

In systems using adaptive power control, it is advantageous to assign consecutive time slots. In such systems, a modified approach may be used. Using first available, the first available number of consecutive time slots would be assigned. For instance, if three time slots were to be assigned, code 1, S5-S7 would be selected. Using least-interfered channel, the consecutive time slots with the least interference are selected. For instance, if three were assigned, code 1, S11-S13 would be selected.

Similarly, to minimize the number of time slots used, multiple codes within a time slot are assigned, such as codes 1-3, S11. Additionally, a hybrid approach, such as blocks, may be used - i.e. for four resource units, code 1, S11-S12 and code 2, S11-S12.

One technique for assigning resource units is to minimize the number of time slots used. By reducing the number of used time slots, interference to neighboring cells is reduced. Using the multiple threshold technique, when resource units need to be allocated initially, the system finds the time slot or slots with the maximum number of codes available as determined by the interference level. As a result, the minimum number of time slots are allocated for a given number of resource units.

After the initial allocation, resource units are assigned to the time slots which already allocated codes to communications but still have codes available first. This allocation prevents additional time slots from being used. After the previously assigned time slots are used, new time slots are assigned with the time slot having the highest number of available codes being assigned first.

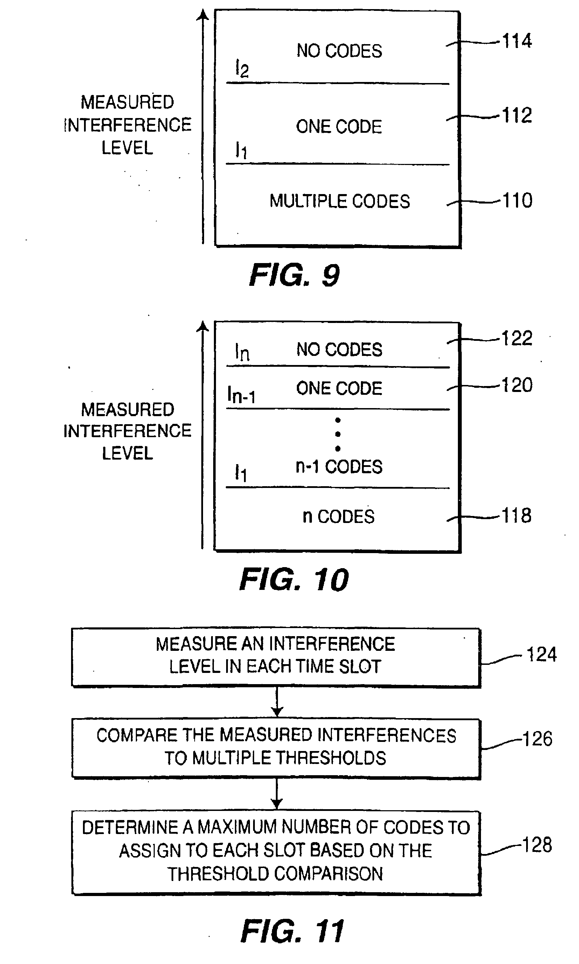

Figure 11 illustrates an approach for controlling the maximum number of codes assigned to a time slot. Generally, it is desirable to limit the number of time slots used. By not using time slots, these time slots are left available for use by other cross interfering cells.

An interference level for each time slot is measured, 124. To determine the number of codes that should be used in each time slot, a multiple threshold scheme is utilized. The measured interference for each slot is compared to the multiple thresholds 126, and a maximum number of time slots to assign is determined from the comparison, 128. One multiple threshold scheme uses two thresholds, I₁ and I₂ as shown in Figure 9. If the measured interference level is below I₁, multiple codes 110 may be assigned to the time slot. If the measured interference level is between I₁ and I₂, one code 112 may be assigned in these time slots. If the interference level is above I₂, no codes 114 may be used in this time slot.

Another multiple threshold scheme,as shown in Figure 10, uses more than two interference levels, I₁, I₂,...,Iₙ. If the measured interference level is above Iₙ, no codes 122 are available. If between Iₙ and Iₙ₋₁, one code 120 is available. The codes available for the time slot keep increasing by one per each threshold, Iₙ₋₂, Iₙ₋₃, etc., until the interference level is less than I₁. When the interference is less than I₁, n codes 118 are available for the time slot.

## Claims

1. A method for determining a maximum number of codes to assign to a time slot, the method comprising:
measuring an interference level of the time slot;
comparing the measured interference level to a plurality of thresholds (I₁,..., Iₙ₋₁, Iₙ) having decreasing levels; and
determining the maximum number of codes (110, 112, 114, 118, 120, 122) to assign to the time slot based on the result of the comparing step, wherein the determined maximum number of codes (110, 112, 114, 118, 120, 122) is increased for each threshold which the measured interference level falls below.

2. The method of claim 1, wherein the determined maximum number of codes is:
no codes (114, 122), if the measured interference level exceeds a highest threshold level,
one code (112,120), if the measured interference level is between the highest and a next highest threshold level, or
multiple code (110, 118), if the measured interference level is below the next highest threshold level.

3. The method of claim 2, wherein said multiple codes are two codes and wherein the maximum number of codes determined in the determining step is increased by one for each additional threshold, with a level lower than the next highest threshold, that the measured interference level falls below.

4. The method as claimed in claim 1, wherein the measured interference level is measured using interference signal code power, ISCP.

5. The method as claimed in claim 4, wherein the ISCP is measured using a received power of midambles.

6. The method as claimed in claim 1, wherein the measured interference level is measured using a measure of inter-cell interference.

## Revendications

1. Procédé de détermination d'un nombre maximal de codes à affecter à un créneau temporel, le procédé comprenant les étapes consistant à :
mesurer un niveau d'interférence du créneau temporel ;
comparer le niveau d'interférence mesuré à une pluralité de seuils (I₁, ..., Iₙ₋₁, Iₙ) ayant des niveaux décroissants ; et
déterminer le nombre maximal de codes (110, 112, 114, 118, 120, 122) à affecter à un créneau temporel sur la base du résultat de l'étape de comparaison, dans lequel le nombre maximal déterminé de codes (110, 112, 114, 118, 120, 122) augmente pour chaque seuil en dessous duquel passe le niveau d'interférence mesuré.

2. Procédé selon la revendication 1, dans lequel le nombre maximal déterminé de codes est :
aucun code (114, 122), si le niveau d'interférence mesuré dépasse un niveau seuil maximal ;
un code (112, 120), si le niveau d'interférence mesuré est compris entre le niveau seuil maximal et un niveau seuil maximal suivant, ou
plusieurs codes (110, 118), si le niveau d'interférence mesuré est inférieur au niveau seuil maximal suivant.

3. Procédé selon la revendication 2, dans lequel lesdits plusieurs codes sont deux codes, et dans lequel le nombre maximal de codes déterminés dans l'étape de détermination augmente de un pour chaque seuil supplémentaire, avec un niveau inférieur au seuil maximal suivant, en dessous duquel passe le niveau d'interférence mesuré.

4. Procédé selon la revendication 1, dans lequel le niveau d'interférence mesuré est mesuré en utilisant la puissance de code de signal d'interférence, ISCP.

5. Procédé selon la revendication 4, dans lequel l'ISCP est mesurée en utilisant une puissance reçue de séquences intermédiaires.

6. Procédé selon la revendication 1, dans lequel le niveau d'interférence mesuré est mesuré en utilisant une mesure d'interférence entre les cellules.

## Patentansprüche

1. Verfahren zum Bestimmen einer maximalen Anzahl von Codes, die einem Zeitschlitz zugewiesen werden sollen, wobei das Verfahren aufweist:
Messen eines Interferenzpegels des Zeitschlitzes;
Vergleichen des gemessenen Interferenzpegels mit mehreren Schwellenwerten (I₁, ..., Iₙ₋₁, In) mit abnehmenden Pegeln; und
Bestimmen der maximalen Anzahl von Codes (110, 112, 114, 118, 120, 122), die dem Zeitschlitz zugewiesen werden sollen, basierend auf dem Ergebnis des Vergleichsschritts, wobei die bestimmte maximale Anzahl von Codes (110, 112, 114, 118, 120, 122) für jeden Schwellenwert, unter den der gemessene Interferenzpegel fällt, erhöht wird.

2. Verfahren nach Anspruch 1, wobei die bestimmte maximale Anzahl von Codes ist:
keine Codes (114, 122), wenn der gemessene Interferenzpegel den höchsten Schwellenpegel überschreitet;
ein Code (112, 120), wenn der gemessene Interferenzpegel zwischen dem höchsten und einem nächsthöchsten Schwellenpegel ist;
mehrere Codes (110, 118), wenn der gemessene Interferenzpegel unter dem nächsthöchsten Schwellenpegel ist.

3. Verfahren nach Anspruch 2, wobei die mehreren Codes zwei Codes sind und wobei die maximale Anzahl von Codes, die in dem Bestimmungsschritt bestimmt wird, für jeden zusätzlichen Schwellenwert mit einem niedrigeren Pegel als der nächsthöhere Schwellenwert, unter den der gemessene Interferenzpegel fällt, um eins erhöht wird.

4. Verfahren nach Anspruch 1, wobei der gemessene Interferenzpegel unter Verwendung der Interference Signal Code Power, ISCP, gemessen wird.

5. Verfahren nach Anspruch 4, wobei die ISCP unter Verwendung einer empfangenen Midamble-Leistung gemessen wird.

6. Verfahren nach Anspruch 1, wobei der gemessene Interferenzpegel unter Verwendung eines Maßes für die Inter-Zell-Interferenz gemessen wird.
